# EUROPEAN PATENT APPLICATION

(11) **EP 4 600 178 A1**
(43) Date of publication of application: **13.08.2025**
(21) Application number: 23874475.9
(22) Date of filing: 15.06.2023
(51) Int. Cl.: B65G 1/00, B65G 47/52

(54) **TRANSFER SYSTEM, TRANSFER FACILITY, AND PARTITION MATERIAL**

(30) Priority: 07.10.2022 JP 2022162562
(71) Applicant: Daifuku Co., Ltd., Osaka-shi, Osaka 555-0012 (JP)
(72) Inventor: UEDA, Yuichi, Gamo-gun, Shiga 529-1692 (JP); TSUKAMOTO, Kunihiro, Gamo-gun, Shiga 529-1692 (JP); MATSUMOTO, Kosuke, Gamo-gun, Shiga 529-1692 (JP)
(74) Representative: Meissner Bolte Partnerschaft mbB
(86) International application number: PCT/JP2023/022203
(87) International publication number: WO 2024/075340

(57) **Abstract**

A transfer system (1) includes a partition part (24) which separates (i) a work area (25) positioned opposite to a transporting part (11) across a transferring part (12) in a plan view and (ii) an outside area from each other. The partition part (24) includes a first portion (24a) provided so as to be opposite to the transferring part (12) across the work area (25) and a second portion (24b) provided so as to be inclined at an obtuse angle with respect to the first portion (24a) as seen from the work area (25) in a plan view, the second portion (24b) being provided with an entry-and-egress door for the work area (25).

## Description

### Technical Field

The present invention relates to a transfer system, a transfer facility, and a partition material, each of which is for an article in physical distribution.

### Background Art

Conventionally, in distribution warehouses etc., a transfer system including a picking device (transfer device), such as a robot arm, is used so as to efficiently sort a various kinds of many articles into shipment containers according to shipment destinations. In relation to this type of transfer system, Patent Literature 1 discloses a configuration in which a transfer device and a work area for a worker who uses the transfer device are separated from each other by a safety fence.

### Citation List

### [Patent Literature]

[Patent Literature]
   Japanese Patent Application Publication, Tokukaihei, No. 10-139109 (1998)

### Summary of Invention

### Technical Problem

However, the conventional safety fence disclosed in Patent Literature 1 has a door disposed so as to be opposite to the transfer device. This arises the following problem in the conventional technique. That is, it is impossible to reduce enlargement of an installation space for the safety fence, and accordingly it is impossible to reduce enlargement of an installation space for the transfer system. Thus, it is difficult to save a space for the transfer system.

An aspect of the present invention has an object to provide a transfer system, a transfer facility, and a partition material, with each of which a space can be saved even when a work area is separated.

### Solution to Problem

In order to attain the above object, a transfer system in accordance with an aspect of the present invention includes: a transporting part which transports an article in a first direction; a transferring part which is provided on one end side of the transporting part and which holds and transfers the article; and a partition part which separates (i) a work area positioned opposite to the transporting part across the transferring part in a plan view and (ii) an outside area from each other, the partition part including a first portion disposed so as to be opposite to the transferring part across the work area, and a second portion disposed so as to be inclined at an obtuse angle with respect to the first portion in a plan view the work area as seen from, the second portion being provided with an entry-and-egress door for the work area.

A transfer facility in accordance with another aspect of the present invention includes: a plurality of transfer systems each of which is the above-described transfer system, the plurality of transfer systems being arranged side by side along a second direction which is orthogonal to the first direction in a plan view so that the transporting parts of the plurality of transfer systems are substantially in parallel with each other.

A partition material in accordance with another aspect of the present invention is a partition material which separates (i) a work area positioned opposite to a transporting part across a transferring part and (ii) an outside area from each other, the transporting part transporting an article in a first direction, the transferring part being disposed on one end side of the transporting part, the transferring part holding and transferring the article, the partition material including: a first portion disposed so as to be opposite to the transferring part across the work area, and a second portion disposed so as to be inclined at an obtuse angle with respect to the first portion as seen from the work area in a plan view, the second portion being provided with an entry-and-egress door for the work area.

### Advantageous Effects of Invention

In accordance with an aspect of the present invention, it is possible to provide a transfer system, a transfer facility, and a partition material, with each of which a space can be saved even when a work area is separated.

### Brief Description of Drawings

Fig. 1 is a perspective view illustrating an overview of a transfer system in accordance with a first embodiment of the present invention.
Fig. 2 is a plan view illustrating an overview of the transfer system.
Fig. 3 is a plan view illustrating an overview of a transfer facility in accordance with a second embodiment of the present invention.
Fig. 4 is a plan view illustrating an overview of a transfer facility in accordance with a third embodiment of the present invention.

### Description of Embodiments

The following description will discuss embodiments of the present invention in details. Note that, for convenience of description, members having functions identical to those of respective members described in embodiments are given respective identical reference signs, and a description of these members is omitted as appropriate.

### First Embodiment

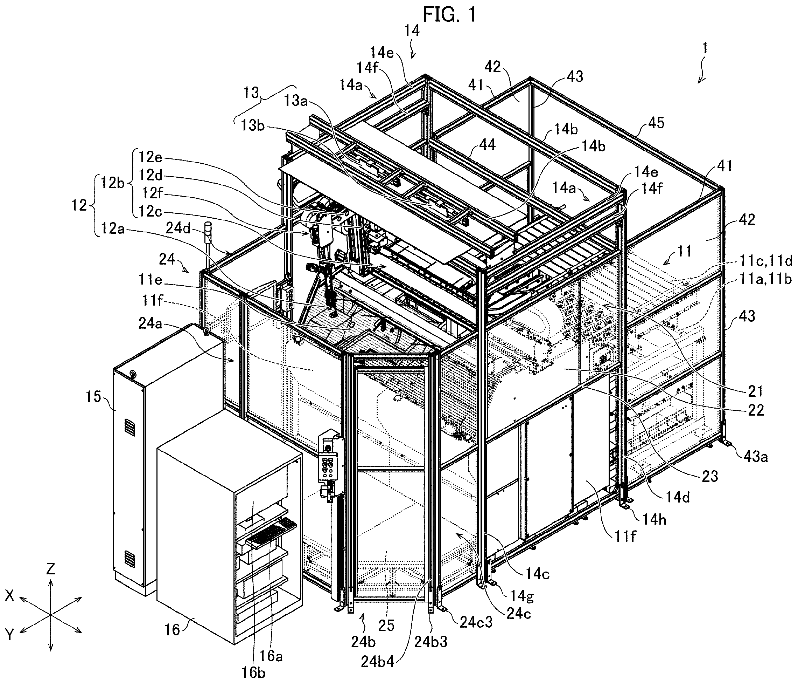

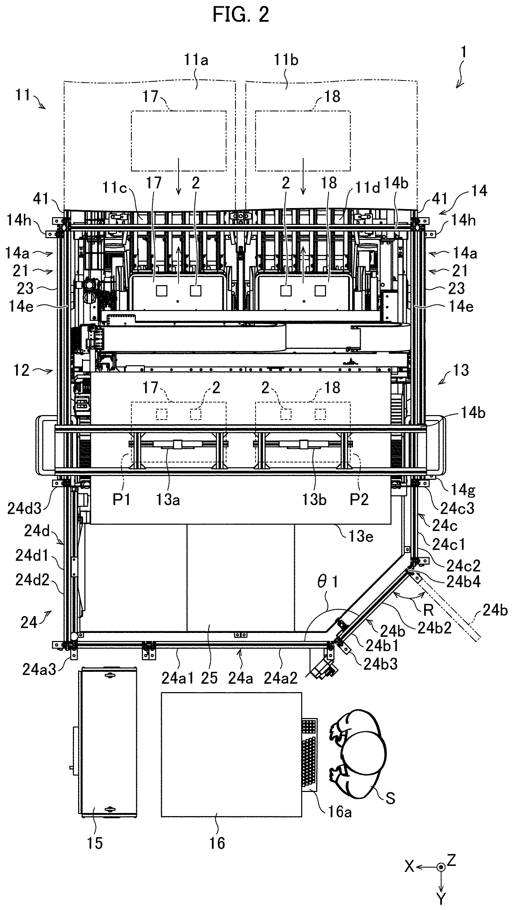

The following description will discuss, with reference to Figs. 1 and 2, a transfer system in accordance with a first embodiment of the present invention. In an example case explained in the following description, the transfer system which transfers an article between two containers, specifically, a first container and a second container is provided. Each of the first container and the second container can be provided as a shipment container which is to be discharged to an outside of a transfer system 1.

### (Overview of Transfer System)

Fig. 1 is a perspective view illustrating an overview of the transfer system 1 in accordance with the first embodiment of the present invention. Fig. 2 is a plan view illustrating an overview of the transfer system 1. The transfer system 1 carries out transferring of an article 2 in a distribution warehouse or the like. As shown in Figs. 1 and 2, the transfer system 1 in accordance with the first embodiment includes a transporting part 11, a transferring part 12, and a partition part 24. The transfer system 1 further includes a camera part 13, support parts 14 and 14, a control part 15, and a terminal part 16.

### (Transporting Part)

The transporting part 11 transports, in a Y direction (a front-rear direction, a first direction), a first container 17 and a second container 18 each configured to house an article 2 therein. To be more specific, the transporting part 11 includes (i) carry-in conveyors 11a and 11b disposed on a lower side in a Z direction and (ii) carry-out conveyors 11c and 11d disposed on an upper side in the Z direction. By the carry-in conveyors 11a and 11b, the first container 17 and the second container 18 are transported toward a front side in the Y direction. By the carry-out conveyors 11c and 11d, the first container 17 and the second container 18 are transported toward a rear side in the Y direction.

Further, the transporting part 11 includes a moving mechanism 11e and a housing 11f. The moving mechanism 11e causes the first container 17 coming from the carry-in conveyor 11a to be moved to a first transfer position P1 one by one in order, and causes the second container 18 coming from the carry-in conveyor 11b to be moved to a second transfer position P2 one by one in order. Further, the moving mechanism 11e causes the first container 17 positioned at the first transfer position P1 to be moved to the carry-out conveyor 11c one by one in order, and causes the second container 18 positioned at the second transfer position P2 to be moved to the carry-out conveyor 11d one by one in order. The housing 11f houses the moving mechanism 11e therein.

### (Transferring Part)

The transferring part 12 is disposed on a front end (one end) side of the transporting part 11 in the Y direction. The transferring part 12 holds an article 2 housed in the first container 17 positioned at the first transfer position P1, and transfers the article 2 to the second container 18 positioned at the second transfer position P2. The transferring part 12 is provided by a stand and/or the like (not illustrated) at a location which is upward of the moving mechanism 11e and the housing 11f of the transporting part 11 in the Z direction.

The transferring part 12 includes a picking head 12a which holds the article 2 and a driving part 12b which raises and lowers the picking head 12a in the Z direction and causes the picking head 12a to move in two directions, specifically, the X direction and the Y direction in a plan view. The picking head 12a is constituted by, for example, one or more suction pads configured to suck the article 2. The picking head 12a sucks the article 2 housed in the first container 17 from above, and holds the article 2 by hanging the article 2.

The driving part 12b includes a fixed rail 12c, a first movable rail 12d, a second movable rail 12e, and a support arm 12f. The fixed rail 12c is disposed along the X direction. The first movable rail 12d is disposed along the Z direction, and moves in a reciprocating manner along the fixed rail 12c in the X direction. The second movable rail 12e is disposed along the Y direction, and moves in a reciprocating manner along the first movable rail 12d in the Z direction.

The support arm 12f is disposed along the Z direction, and moves in a reciprocating manner along the second movable rail 12e in the Y direction. Further, the support arm 12f has, on its lower side in the Z direction, the picking head 12a attached thereto. Thus, by controlling operation of the driving part 12b, the transferring part 12 can cause the picking head 12a to move in a reciprocating manner in three directions, specifically, the X, Y, and Z directions.

The transferring part 12 has a structure that is simpler than that of a transferring unit such as, for example, a six-axis robot, and is easily applicable to a multi-line conveyor layout. Therefore, if the transferring part 12 is employed, it is possible to improve a degree of freedom in layout design of the transfer system 1.

### (Camera Part)

The camera part 13 is disposed above the transferring part 12, and captures an image of the article 2. The camera part 13 includes a first camera 13a and a second camera 13b. By capturing an image of the first container 17 positioned at the first transfer position P1, the first camera 13a captures an image of one or more articles 2 housed in the first container 17. By capturing an image of the second container 18 positioned at the second transfer position P2, the second camera 13b captures an image of one or more articles 2 housed in the second container 18. Note that the camera part 13 may include a light or the like, and each of the first camera 13a and the second camera 13b may capture the image of the one or more articles 2 in a state where the one or more articles 2 are irradiated by the light or like with a given intensity of illumination.

### (Support Frame)

A support frame 14 is a frame body which supports the camera part 13. The support frame 14 includes (i) support parts 14a and 14a that are disposed so as to be adjacent to the transferring part 12 in the X direction (lateral direction, second direction) perpendicular to the Y direction in a plan view and (ii) beam members 14b and 14b that are bridged between the support parts 14a and 14a. The first camera 13a and the second camera 13b are disposed at respective appropriate positions on the beam member 14b that is located on the front side in the Y direction. Note that the number of beam members 14b may be one or three or more.

Each of the support parts 14a and 14a includes two column members 14c and 14d, a girder member 14e, and a reinforcement member 14f. The column members 14c and 14d are arranged in the Y direction, and fixed, by respective fixing members 14g and 14h, to a place in which the transfer system 1 is installed. The girder member 14e and the reinforcement member 14f are bridged between the column members 14c and 14d.

Note that the beam members 14b and 14b may be disposed on the girder member 14e or may be disposed to the column members 14c and 14d, respectively. The support parts 14a and 14a may each include two or more reinforcement members 14f, or the reinforcement member 14f may be omitted. In a case where each of the support parts 14a and 14a is disposed upright with four or more column members, the beam members 14b and 14b may be omitted. In this case, the first camera 13a and the second camera 13b may be disposed at respective appropriate positions on the support parts 14a and 14a.

### (Control Part and Terminal Part)

The control part 15 includes a control device and/or the like controlling each part in the transfer system 1. The terminal part 16 includes (i) an operation accepting part, such as a keyboard 16a, via which a worker S (Fig. 2) operates the transfer system 1 and (ii) a monitor 16b which displays given information. The control part 15 and the terminal part 16 are examples of a controller of the transfer system 1, and are disposed on a side which is outside of the partition part 24 and which is opposite to the later-described work area 25 across a first portion 24a of the partition part 24.

To be more specific, the control part 15 is connected to the transporting part 11, the transferring part 12, the camera part, and the terminal part 16 via electric wiring (not illustrated). The control part 15 obtains given information such as a state of a motion from each of the transporting part 11 and the transferring part 12, and outputs a given command signal such as an instruction signal to each of the transporting part 11 and the transferring part 12. The control part 15 outputs a given instruction signal such as an on/off signal to each of the first camera 13a and the second camera 13b of the camera part 13, and obtains image data from each of the first camera 13a and the second camera 13b. The control part 15 receives, from the terminal part 16, an instruction signal and/or the like corresponding to operation conducted by the worker S, and transmits, to the terminal part 16, the information obtained from the transporting part 11, the transferring part 12, and the camera part 13.

### (Guard)

In the transfer system 1 in accordance with the first embodiment, the transferring part 12 makes a motion in such a manner that the picking head 12a moves in a reciprocating manner in three directions, i.e., the X, Y, and Z directions. Thus, as illustrated in Figs. 1 and 2, a guard for significantly reducing a possibility that the worker S and/or the like may come into contact with the transferring part 12 is provided around the transferring part 12, from the viewpoint of safety. Specifically, in the first embodiment, as the guard, the partition part 24, side guard parts 21, and rear guard parts 41 are provided in order from a controller side toward the rear side in the Y direction.

### (Partition Part)

As shown in Figs. 1 and 2, in the transfer system 1, the partition part 24 is provided such that (i) the work area 25 positioned opposite to the transporting part 11 across the transferring part 12 in a plan view and (ii) an outside area are separated from each other by the partition part 24. The partition part 24 is connected to the two support parts 14a and 14a.

The work area 25 is a space where the worker S carries out manual transferring in which the worker S holds and transfers an article 2. That is, with the transfer system 1 in accordance with the first embodiment, it is possible to execute both (i) the automatic transferring according to which an article 2 is held and transferred by the transferring part 12 and (ii) the manual transferring according to which the worker S enters the work area 25 and an article 2 is held and transferred by the worker S in the work area 25. The partition part 24 is provided around the work area 25 so as to be adjacent to the work area 25.

The partition part 24 includes, as partition materials, the first portion 24a, a second portion 24b, a third portion 24c, and a fourth portion 24d. The first portion 24a is a portion disposed in parallel with the X direction, and is provided so as to be opposite to the transferring part 12 across the work area 25. The second portion 24b is a portion disposed at an angle with respect to each of the X direction and the Y direction, and is set so as to be inclined at an obtuse angle θ1 (Fig. 2) with respect to the first portion 24a as seen from the work area 25 in a plan view. The third portion 24c is a portion disposed in parallel with the Y direction, and is set so as to be seamlessly connected to the second portion 24b and the side guard part 21 included in one of the support parts 14a. The fourth portion 24d is a portion disposed in parallel with the Y direction, and is set so as to be seamlessly connected to the first portion 24a and the side guard part 21 included in the other of the support parts 14a.

Specifically, the first portion 24a includes a transparent plate 24a1. The transparent plate 24a1 is held by a frame body 24a2 shaped in a frame. The first portion 24a is fixed, by two fixing members 24a3 and 24a3, to the place where the transfer system 1 is installed, the two fixing members 24a3 and 24a3 being provided to both ends of the transparent plate 24a1 which ends are on a lower side of the frame body 24a2 in the Z direction.

The second portion 24b includes a transparent plate 24b1. The transparent plate 24b1 is held by a frame body 24b2 shaped in a frame. The second portion 24b is fixed, by two fixing members, to the place where the transfer system 1 is installed, the two fixing members 24b3 and 24b3 being provided to both ends of the transparent plate 24b1 which ends are on a lower side of the frame body 24b2 in the Z direction.

A whole of the second portion 24b constitutes an entry-and-egress door which allows the worker S to enter or exit from the work area 25 therethrough. That is, the second portion 24b has, for example, a turning shaft part 24b4 at a location above one of the fixing members 24b3 which is closer to the third portion 24c. Further, in the second portion 24b, as indicated by the broken lines in Fig. 2, the frame body 24b2 is turnably supported by the turning shaft part 24b4 so as to allow the frame body 24b2 to turn in an R direction (Fig. 2). Specifically, the turning shaft part 24b4 includes a bearing (not illustrated) provided on the fixing member 24b3, and supports a part of the frame body 24b2 with the bearing in such a manner as to allow the frame body 24b2 to turn.

In the second portion 24b, an end of the second portion 24b which end is closer to the first portion 24a turns around the turning shaft part 24b4 according to the worker S operation. Consequently, the partition part 24 is opened. As discussed above, the second portion 24b is turnably supported on a side opposite to a side on which the first portion 24a resides, and functions as the entry-and-egress door. With this, even in a case where a plurality of transfer systems 1 are arranged side by side, the worker S can easily enter and exit from the space inside the partition part 24 from the first portion 24a side, and a degree of protrusion of the second portion 24b (entry-and-egress door) in a direction (Y direction) of arrangement of the transfer systems 1 can be reduced.

Further, in the second portion 24b, the obtuse angle θ1 is set so as to fall within a range of an angle of not less than 130 degrees and not more than 140 degrees, for example. Setting the obtuse angle θ1 so as to fall within such an angle range makes it possible to effectively reduce a degree of protrusion of the second portion 24b (entry-and-egress door) which protrusion is observed when the entry-and-egress door is turned toward the outside of the partition part 24 and is opened.

In a case where, in the second portion 24b, the obtuse angle θ1 is set at an angle of less than 130 degrees, this will increase the size of the second portion 24b, thereby making it impossible to effectively reduce a degree of protrusion of the entry-and-egress door which protrusion is observed when the entry-and-egress door is opened. Further, this will reduce the size of the first portion 24a, thereby making it difficult to easily secure a place where the control part 15 and the terminal part 16 are installed. Meanwhile, in a case where the obtuse angle θ1 is set at an angle exceeding 140 degrees, this will reduce the size of the second portion 24b, thereby providing an entry-and-egress door which does not allow easy entry and egress of the worker S.

In the case explained above, the whole of the second portion 24b constitutes the entry-and-egress door. However, the present embodiment is not limited to this. Alternatively, the entry-and-egress door may be provided to a part of the second portion 24b. That is, for example, the frame body of the second portion 24b may be provided with a transparent plate which is turnable, so that the transparent plate serves as the entry-and-egress door.

The third portion 24c includes a transparent plate 24c1. The transparent plate 24c1 is held by a frame body 24c2 shaped in a frame. The third portion 24c is fixed, by two fixing members 24c3 and 24c3, to the place where the transfer system 1 is installed, the two fixing members 24c3 and 24c3 being provided to both ends of the transparent plate 24c1 which ends are on a lower side of the frame body 24c2 in the Z direction.

The fourth portion 24d includes a transparent plate 24d1. The transparent plate 24d1 is held by a frame body 24d2 shaped in a frame. The fourth portion 24d is fixed, by two fixing members 24d3 and 24d3, to the place where the transfer system 1 is installed, the two fixing members 24d3 and 24d3 being provided to both ends of the transparent plate 24d1 which ends are on a lower side of the frame body 24d2 in the Z direction.

With the above configuration, it is possible to significantly reduce a possibility that the worker S may accidentally enter the work area 25 and come into contact with the transferring part 12. As a result, it is possible to enhance safety of the transfer system 1. Further, in the above configuration, the partition part 24 is provided so as to be adjacent to the work area 25. Providing the partition part 24 makes it possible to reduce enlargement of the installation space for the transfer system 1.

Note that, in a case where the transfer system 1 is capable of executing only the automatic transferring, the work area 25 may be set as a monitoring area where a monitoring person monitors the transferring part 12.

### (Side Guard Part)

In the first embodiment, the support parts 14a and 14a include the respective side guard parts 21 which separate (i) the transferring part 12 and (ii) an outside area in the X direction from each other. Each of the side guard parts 21 includes a transparent plate 22 and a frame member 23 which holds the transparent plate 22. With this, it is possible to significantly reduce a possibility that the worker S may enter the inside in the X direction and come into contact with the transferring part 12. As a result, it is possible to enhance safety of the transfer system 1.

Furthermore, since the support parts 14a and 14a are provided with the respective side guard parts 21, it is not necessary to additionally provide, to outer sides of the support parts 14a and 14a in the X direction, a guard part for separating the transferring part 12 and the outside area in the X direction from each other. As a result, it is possible to save the space for the transfer system 1.

Incidentally, since the two support parts 14a and 14a are disposed so as to be adjacent to the transferring part 12 in the X direction, the two support parts 14a and 14a are also adjacent to the housing 11f of the transporting part 11, which is located on a lower side of the transferring part 12 in the Z direction. Thus, in the present embodiment, the side guard parts 21 are omitted in lower areas of the support part 14a, that is, areas facing the housing 11f. Consequently, it is possible to reduce an area where the side guard parts 21 are provided. Meanwhile, it is possible to prevent, by the housing 11f, the worker S from entering the inside through the lower area of the support part 14a and coming into contact with the transferring part 12. That is, in the lower areas of the support parts 14a, the housing 11f serves as a partition between the transferring part 12 and the outside area in the X direction.

### (Rear Guard Part)

Further, in the first embodiment, the rear guard parts 41 and 41 are provided. The rear guard parts 41 and 41 are adjacent, in the X direction, to a front end of the transporting part 11 in the Y direction. The rear guard parts 41 and 41 separate (i) the front end and (ii) an outside area in the X direction from each other. Each of the rear guard parts 41 includes a transparent plate 42 and a frame member 43 which holds the transparent plate 42. Front ends of the rear guard parts 41 and 41 in the Y direction are respectively coupled (connected) to rear sides of the support parts 14 and 14 in the Y direction. Further, corners of the frame member 43 which corners are on a lower side in the Z direction are fixed, by fixing members 43a, to the place where the transfer system 1 is installed. Furthermore, reinforcement members 44 and 45 are provided between the rear guard parts 41 and 41.

With this, it is possible to significantly reduce a possibility that the worker S may enter the inside from the transporting part 11 and come into contact with the transferring part 12. As a result, it is possible to enhance safety of the transfer system 1. Furthermore, in the above configuration, the rear guard parts 41 are provided so as to be adjacent to the transporting part 11. Providing the rear guard parts 41 makes it possible to reduce enlargement of the installation space for the transfer system 1.

Moreover, the partition part 24, the side guard parts 21, and the rear guard parts 42 in accordance with the first embodiment include, as substantial guards, the transparent plates 24a1, 24b1, 24c1, 24d1, 22, and 42. With this, in accordance with the first embodiment, as a monitoring person, the worker S for the transfer system 1 can monitor the transporting part 11 and the transferring part 12 from the outside of the transfer system 1. Note that the transparent plates 24a1, 24b1, 24c1, 24d1, 22, and 42 may be replaced with guards each of which is in shape of a fence, a net, or the like.

### (Example of Operation of Transfer System)

In the transfer system 1 configured as described above, the control part 15 first instructs the carry-in conveyors 11a and 11b of the transporting part 11 to carry in the first container 17 and the second container 18, respectively, from the rear side in the Y direction toward the front end in the Y direction and to continue such transporting. The control part 15 also instructs the carry-out conveyors 11c and 11d of the transporting part 11 to carry out the first container 17 and the second container 18 from a front end portion in the Y direction toward the rear side in the Y direction and to continue such transporting.

Next, the control part 15 instructs the moving mechanism 11e of the transporting part 11 to move the first container 17 and the second container 18, which have been carried in, to the first transfer position P1 and the second transfer position P2, respectively. The control part 15 then instructs, on the basis of images of the first container 17 and the second container 18 which images have been captured by the camera part 13, the transferring part 12 to hold an article 2 housed in the first container 17 positioned at the first transfer position P1 and to transfer the article 2 into the second container 18 positioned at the second transfer position.

Next, the control part 15 instructs the moving mechanism 11e of the transporting part 11 to move the first container 17 positioned at the first transfer position P1 to the carry-out conveyor 11c and moves another first container 17, having been carried in, to the first transfer position P1. Then, the control part 15 instructs the transferring part 12 to carry out the above transferring and repeat this process. The first container 17 that has been moved to the carry-out conveyor 11c is carried out toward the rear side in the Y direction.

Then, when the given article 2 is housed in the second container 18, the control part 15 instructs the moving mechanism 11e of the transporting part 11 to move the first container 17 positioned at the first transfer position P1 to the carry-out conveyor 11c and to move the second container 18 positioned at the second transfer position P2 to the carry-out conveyor 11d. The first container 17 having been moved to the carry-out conveyor 11c and the second container 18 having been moved to the carry-out conveyor 11d are carried out toward the rear side in the Y direction.

### (Effects of Transfer System 1)

As discussed above, in the transfer system 1 in accordance with the first embodiment, the work area 25 is separated from the outside by the partition part 24 (partition material). Further, in the partition part 24, the second portion 24b (entry-and-egress door) is provided so as to be inclined with respect to the first portion 24a at an angle within an angle range of the obtuse angle θ1. Thus, in accordance with the first embodiment, a degree of protrusion of the second portion 24b which protrusion is observed when the second portion 24b is turned toward the outside of the partition part 24 and is opened. With this, in accordance with the first embodiment, it is possible to provide the transfer system 1 in which the space can be saved even when the work area 25 is separated by using the partition part 24.

Furthermore, in accordance with the first embodiment, the control part 15 and the terminal part 16 are installed on a side which is opposite to the work area 25 across the first portion 24a of the partition part 24. Consequently, the worker S standing outside the partition part 24 can visually observe (i) an operation state of the transferring part 12 and (ii) the monitor 16b of the terminal part 16 at the same time.

### Second Embodiment

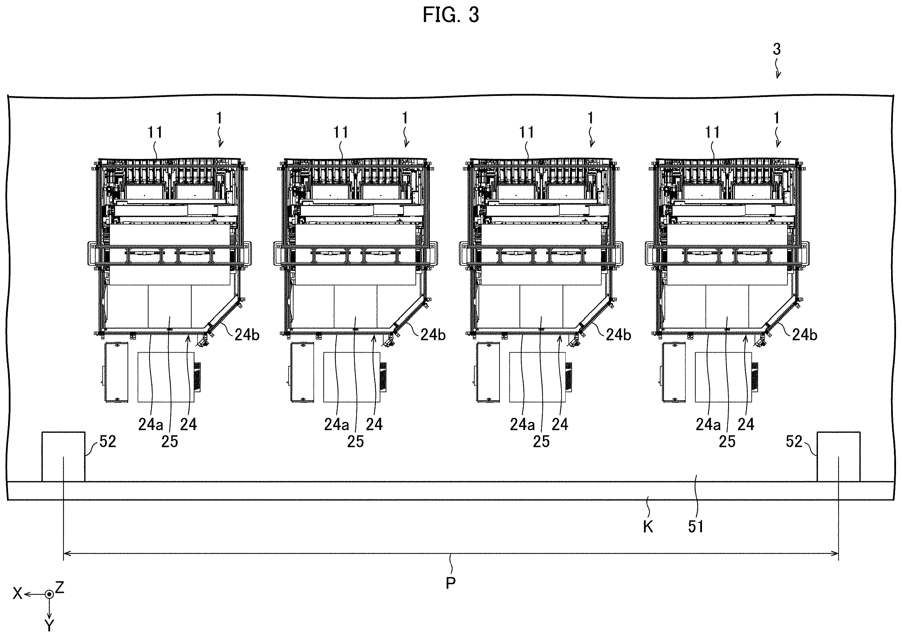

The following description will discuss, with reference to Fig. 3, a second embodiment of the present invention. Fig. 3 is a plan view illustrating an overview of a transfer facility 3 in accordance with a second embodiment of the present invention.

As shown in Fig. 3, the transfer facility 3 includes a plurality of transfer systems 1 each of which is the transfer system shown in Figs. 1 and 2. In the transfer facility 3, the plurality of transfer systems 1 are arranged side by side along an X direction orthogonal to a Y direction in a plan view such that transporting parts 11 of the respective transfer systems 1 are substantially in parallel with each other.

In the case where the guard is provided around the picking device which carries out an automatic transferring work in the transfer system in the above-described manner, an installation space for the transfer system will be enlarged. This will increase an interval between adjacent ones of the transfer systems.

On the other hand, in accordance with the second embodiment, the plurality of transfer systems 1 are arranged side by side along the X direction such that the transporting parts 11 of the transfer systems 1 are substantially in parallel with each other. Further, since each of the transfer systems 1 includes the partition part 24, it is possible to reduce an interval between adjacent ones of the transfer systems 1. With this, in accordance with the second embodiment, it is possible to provide the transfer facility 3 in which the space can be saved even in a case where each of the plurality of transfer systems 1 is configured such that the work area 25 is separated by using the partition part 24.

Incidentally, in a building 51 such as a distribution warehouse, support column members 52 are generally arranged at predetermined intervals P in a protruding manner so as to serve as support columns supporting an upper floor or a ceiling, so that an installation space for installing the transfer system is provided. Thus, from the viewpoint of enhancement in efficiency of transferring of an article 2, the number of transfer systems which can be installed within the predetermined interval P is desirably large.

However, providing the guard around the picking device will enlarge the installation space for the transfer system. As a result, there is a possibility that the number of transfer systems which can be installed within the predetermined interval P may decrease.

On the other hand, according to the present embodiment, the plurality of transfer systems 11 are arranged side by side along an X direction, given that the X direction is a direction in which the support column members 52 and 52 adjacent to each other are arranged. Consequently, it is possible to reduce increase in the interval between the transfer systems 1 which are adjacent to each other in the X direction. Therefore, it is possible to reduce a possibility that the number of transfer systems 1 which can be installed within the predetermined interval P may decrease, and, conversely, it is possible to increase the number of transfer systems 1 which can be installed.

### Third Embodiment

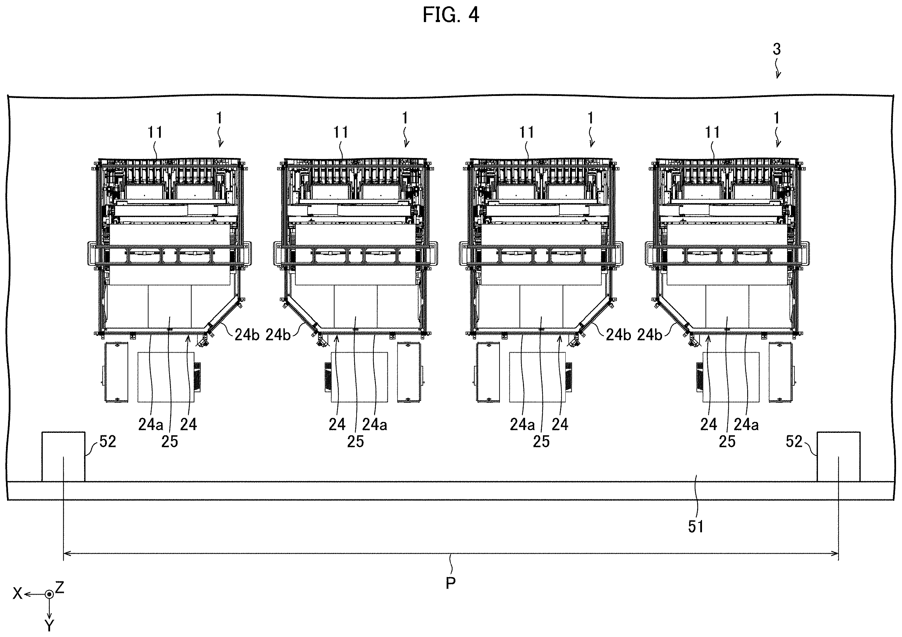

The following description will discuss, with reference to Fig. 4, a third embodiment of the present invention. Fig. 4 is a plan view illustrating an overview of a transfer facility 3 in accordance with a third embodiment of the present invention.

As shown in Fig. 4, in the transfer facility 3 in accordance with the third embodiment, a transfer system 1 includes a first transfer system 1 and a second transfer system 1 which are adjacent to each other. Further, a second portion 24b of the first transfer system 1 may be disposed so as to be closer to the second transfer system 1, and a second portion 24b of the second transfer system 1 may be disposed so as to be closer to the first transfer system 1.

That is, in the transfer facility 3 in accordance with the third embodiment, two transfer systems 1 adjacent to each other are configured such that second portions 24b of partition parts 24 face each other. With this, in the third embodiment, a worker S can easily move in a space between work areas 25 of the two transfer systems 1 adjacent to each other.

Note that the present invention is not limited to the configurations described above. For example, the present invention may be applied to a transferring part including a robot arm.

Aspects of the present invention can also be expressed as follows:
A transfer system in accordance with a first aspect of the present invention includes: a transporting part which transports an article in a first direction; a transferring part which is provided on one end side of the transporting part and which holds and transfers the article; and a partition part which separates (i) a work area positioned opposite to the transporting part across the transferring part in a plan view and (ii) an outside area from each other, the partition part including a first portion disposed so as to be opposite to the transferring part across the work area, and a second portion disposed so as to be inclined at an obtuse angle with respect to the first portion in a plan view the work area as seen from, the second portion being provided with an entry-and-egress door for the work area.

With the above configuration, in the partition part which separates the work area and the outside area from each other, the entry-and-egress door is provided so as to be inclined. This reduces a degree of protrusion of the entry-and-egress door which protrusion is observed when the entry-and-egress door is turned toward the outside of the partition part and is opened. With this, it is possible to provide the transfer system with which space saving can be realized even when the work area is separated by using the partition part.

A second aspect of the present invention is the transfer system in accordance with the first aspect which may be configured such that: a controller for the transfer system is provided on a side which is outside the partition part and which is opposite to the work area across the first portion.

With the above configuration, a worker standing outside the entry-and-egress door can visually observe (i) an operation state of the transferring part and (ii) a controller at the same time.

A third aspect of the present invention is the transfer system in accordance with the first or second aspect which may be configured such that: the entry-and-egress door is turnably supported on a side opposite to a side on which the first portion resides.

With the above configuration, in a case where the plurality of transfer systems are arranged side by side, a worker can easily enter and exit from a space inside the partition part from the first portion side, and a degree of protrusion of the entry-and-egress door in a direction of arrangement of the transfer systems can be reduced.

A fourth aspect of the present invention is the transfer system in accordance with any one of the first to third aspects which may be configured such that: the obtuse angle is not less than 130 degrees and not more than 140 degrees.

With the above configuration, setting the obtuse angle so as to fall within the above angle range makes it possible to effectively reduce a degree of protrusion of the entry-and-egress door which protrusion is observed when the entry-and-egress door is turned toward the outside of the partition part and is opened.

A transfer facility in accordance with a fifth aspect of the present invention is a transfer facility including a plurality of transfer systems each of which is the transfer system in accordance with any one of the first to fourth aspects, the plurality of transfer systems being arranged side by side along a second direction which is orthogonal to the first direction in a plan view so that the transporting parts of the plurality of transfer systems are substantially in parallel with each other.

With the above configuration, since each of the transfer systems includes the partition part, it is possible to reduce an interval between adjacent ones of the transfer systems. With this, it is possible to provide the transfer facility with which space saving can be realized even in a case where the work area is separated by using the partition part in each of the transfer systems.

A sixth aspect of the present invention is the transfer facility in accordance with the fifth aspect which may be configured such that: the transfer facility further includes an installation space for installing the plurality of transfer systems, the installation space including support columns arranged at predetermined intervals along the second direction, the plurality of transfer systems being disposed such that two or more of the plurality of transfer systems are disposed between adjacent ones of the support columns.

With the above configuration, it is possible to increase the number of transfer systems which can be provided between the support columns.

A seventh aspect of the present invention is the transfer facility in accordance with the fifth or sixth aspect which may be configured such that: each of the plurality of transfer systems includes a first transfer system and a second transfer system which are adjacent to each other; and the entry-and-egress door of the first transfer system is provided so as to be closer to the second transfer system, and the entry-and-egress door of the second transfer system is provided so as to be closer to the first transfer system.

With the above configuration, a worker can easily move in a space between the work area of the first transfer system and the work area of the second transfer system.

A partition material in accordance with an eighth aspect of the present invention is a partition material which separates (i) a work area positioned opposite to a transporting part across a transferring part and (ii) an outside area from each other, the transporting part transporting an article in a first direction, the transferring part being disposed on one end side of the transporting part, the transferring part holding and transferring the article, the partition material including: a first portion disposed so as to be opposite to the transferring part across the work area, and a second portion disposed so as to be inclined at an obtuse angle with respect to the first portion as seen from the work area in a plan view, the second portion being provided with an entry-and-egress door for the work area.

With the above configuration, the entry-and-egress door is provided so as to be inclined. This reduces a degree of protrusion of the entry-and-egress door which protrusion is observed when the entry-and-egress door is turned toward the outside of the partition part and is opened. With this, it is possible to provide the partition material with which space saving can be realized even when the work area is separated.

The present invention is not limited to the embodiments, but can be altered by a skilled person in the art within the scope of the claims. The present invention also encompasses, in its technical scope, any embodiment derived by combining technical means disclosed in the embodiments.

### Reference Signs List

1: transfer system
2: article
3: transfer facility
11: transporting part
12: transferring part
24: partition part (partition material)
24a: first portion
24b: second portion (entry-and-egress door)
25: work space
15: control part (controller)
16: terminal part (controller)
52: support column member (support column)

## Claims

1. A transfer system comprising:
a transporting part which transports an article in a first direction;
a transferring part which is provided on one end side of the transporting part and which holds and transfers the article; and
a partition part which separates (i) a work area positioned opposite to the transporting part across the transferring part in a plan view and (ii) an outside area from each other,
the partition part including
a first portion disposed so as to be opposite to the transferring part across the work area, and
a second portion disposed so as to be inclined at an obtuse angle with respect to the first portion in a plan view the work area as seen from, the second portion being provided with an entry-and-egress door for the work area.

2. The transfer system according to claim 1, wherein:
a controller for the transfer system is provided on a side which is outside the partition part and which is opposite to the work area across the first portion.

3. The transfer system according to claim 1 or 2, wherein:
the entry-and-egress door is turnably supported on a side opposite to a side on which the first portion resides.

4. The transfer system according to claim 1 or 2, wherein:
the obtuse angle is not less than 130 degrees and not more than 140 degrees.

5. A transfer facility comprising:
a plurality of transfer systems each of which is a transfer system recited in claim 1 or 2,
the plurality of transfer systems being arranged side by side along a second direction which is orthogonal to the first direction in a plan view so that the transporting parts of the plurality of transfer systems are substantially in parallel with each other.

6. The transfer facility according to claim 5, further comprising:
an installation space for installing the plurality of transfer systems, the installation space including support columns arranged at predetermined intervals along the second direction,
the plurality of transfer systems being disposed such that two or more of the plurality of transfer systems are disposed between adjacent ones of the support columns.

7. The transfer facility according to claim 5, wherein:
each of the plurality of transfer systems includes a first transfer system and a second transfer system which are adjacent to each other; and
the entry-and-egress door of the first transfer system is provided so as to be closer to the second transfer system, and the entry-and-egress door of the second transfer system is provided so as to be closer to the first transfer system.

8. A partition material which separates (i) a work area positioned opposite to a transporting part across a transferring part and (ii) an outside area from each other, the transporting part transporting an article in a first direction, the transferring part being disposed on one end side of the transporting part, the transferring part holding and transferring the article, the partition material comprising:
a first portion disposed so as to be opposite to the transferring part across the work area, and
a second portion disposed so as to be inclined at an obtuse angle with respect to the first portion as seen from the work area in a plan view, the second portion being provided with an entry-and-egress door for the work area.
